# EUROPEAN PATENT SPECIFICATION

(11) **EP 0 622 019 B1**
(45) Date of publication and mention of the grant of the patent: **21.01.1998**
(21) Application number: 94201169.3
(22) Date of filing: 26.04.1994
(51) Int. Cl.: A01K 1/12

(54) **A construction for automatically milking animals**
Gerät zum automatischen Melken von Tieren
Dispositif de traite automatique d'animaux

(30) Priority: 29.04.1993 NL 9300730
(43) Date of publication of application: 02.11.1994
(60) Divisional application: 97202005.1
(73) Proprietor: MAASLAND N.V., 3155 PD Maasland (NL)
(72) Inventor: van der Lely, Cornelis, CH-6300 Zug (CH)
(74) Representative: Mulder, Herman

(56) References cited:
- FR-A- 2 598 236
- GB-A- 1 158 016
- US-A- 4 445 460

## Description

The present invention relates to a construction for automatically milking animals, such as cows, comprising a milkbox and an area where the animals are allowed to move freely, the construction further being provided with one or more doors, gates or similar devices forming a one-way passageway. Consequently, the construction may comprise a cowshed and/or a pasture or a pasture only. In the latter case the milkbox might be transportable in the field. A construction as described in the opening paragraph is known from GB-A-1,158,016. In the construction described in this document there are doors, gates or similar devices forming a one-way passageway between an area where the animals are allowed to move freely and a milking parlour in the form of a so-called 'herring-bone milking parlour'. In a construction for automatic milking, the cows should visit the milkbox of their own from time to time. In order to improve the visits of the cows at the milkbox, the construction in accordance with the invention is characterized in that the milkbox is provided with a milking robot, the area is divided in at least two sub-areas and the doors, gates or similar devices are arranged between said at least two sub-areas to allow the animals to walk around through said at least two sub-areas to and from the milkbox and at least one of said doors, gates or similar devices being provided with a feeding device for feeding animals.

When a number of sub-areas is formed by pastures, fences with a one-way passageway are provided between the pastures. Herewith a rotational grazing system may be obtained, having the advantage that the animals can change from one pasture to another and, consequently, can always take in fresh grass, which improves the milk yield. By the feeding device the animals are stimulated to pass through the passageways and to proceed to following pastures.

To enable the animals to walk also at night easily through the successive pastures in one direction, the animals should be able to find the passageway from one pasture to a next one without any difficulty. Accordingly, the construction may be provided with one or more by lamps illuminated passageways.

Furthermore, the farm buildings may be arranged about centrally in the construction, with the construction being provided with fences having one-way passageways. Such an arrangement facilitates the construction of a rotational grazing system; the pastures included in the one-way walk-through system can now always be grouped around the farm buildings where the milkbox can be placed.

Hereinafter, the invention will be further explained with reference to the accompanying drawings, in which:
Figure 1 represents a pasture area divided into a plurality of pasture fields constituting a one-way pass-through system, while there is provided a cowshed with a milkbox and a passageway where feed can be supplied, if desired;
Figure 2 shows a rotational grazing system where the one-way pass-through system each time comprises two pastures provided with a passageway in between them where feed can be supplied, if desired;
Figure 3 is a plan view of a passageway between two pastures;
Figure 4 is a side view of this passageway;
Figure 5 is a rear view of the passageway shown in Figures 3 and 4, and
Figure 6 shows a rear view of an embodiment of folding doors that open in one direction.

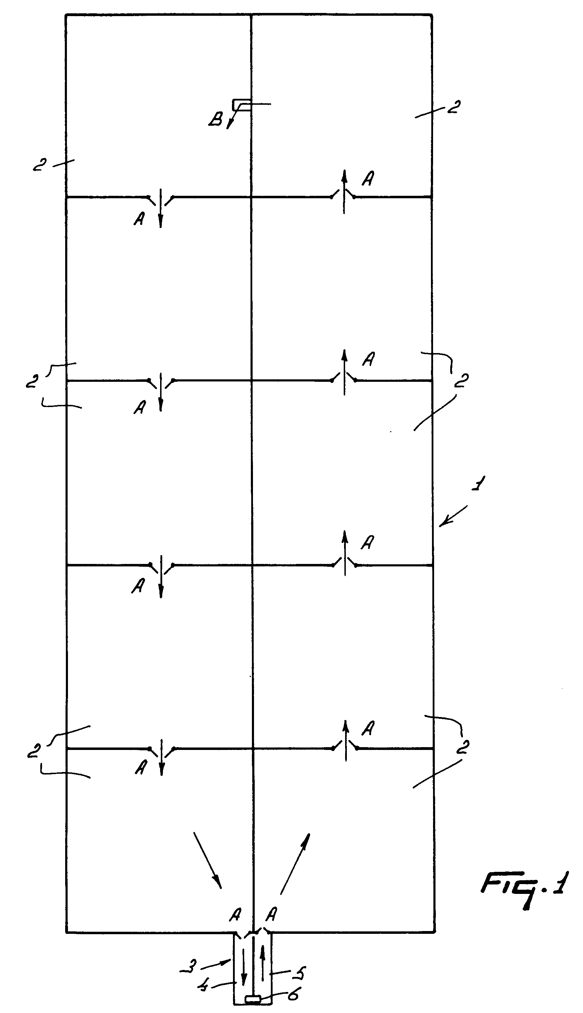

In Figure 1, a pasture area 1 divided into ten separate pastures 2 is indicated. Furthermore, there is shown a cowshed 3 which is divided into halves 4 and 5 which interconnect through a milkbox 6. The milkbox 6 is equipped with a milking robot for automatic connection of teat cups to the teats of animals to be milked. In the milkbox 6 or in its vicinity there are disposed means required for the automatic implementation of milking process. The pastures 2 interconnect through doors, gates or similar devices which open in one direction, and in such a manner that the animals can go from one pasture to another one through a door, gate or a similar means, with all ten of the pastures 2 being walked through successively, without the animals being permitted to return to a pasture where they had been immediately before. In other words, by dividing the pasture area 1 into separate pastures 2 and by making use of doors folding open in one direction, a path and direction of travel for the animals through the entire construction is obtained. From the last pasture walked through, the animals enter the cowshed half 4 through doors which open in one direction; from there the animals can enter the milkbox 6 in order to be milked, whereas after the animals have been milked, they arrive from the milkbox 6 at the cowshed half 5 and subsequently, through folding doors opening unidirectionally, at the first one of the pastures 2 to be walked through again. The path and direction of travel by the animals through the construction therefore comprise not only the individual pastures 2, but also the cowshed halves 4, 5 and the milkbox 6. The folding doors opening unidirectionally are indicated by A in Figure 1, whereas the path and direction of walking through the construction are indicated by arrows. In Figure 1, a passageway B is indicated as connection between the pastures situated most remotely from the cowshed 3. This passageway B is of a nature different from that of the folding doors A opening unidirectionally, since the passageway B comprises a feeding device in addition to such a set of folding doors opening unidirectionally. By giving the animals feed, preferably concentrate, at the furthest place from the cowshed 3, the animals are stimulated to walk from the cowshed all over the pasture area 1.

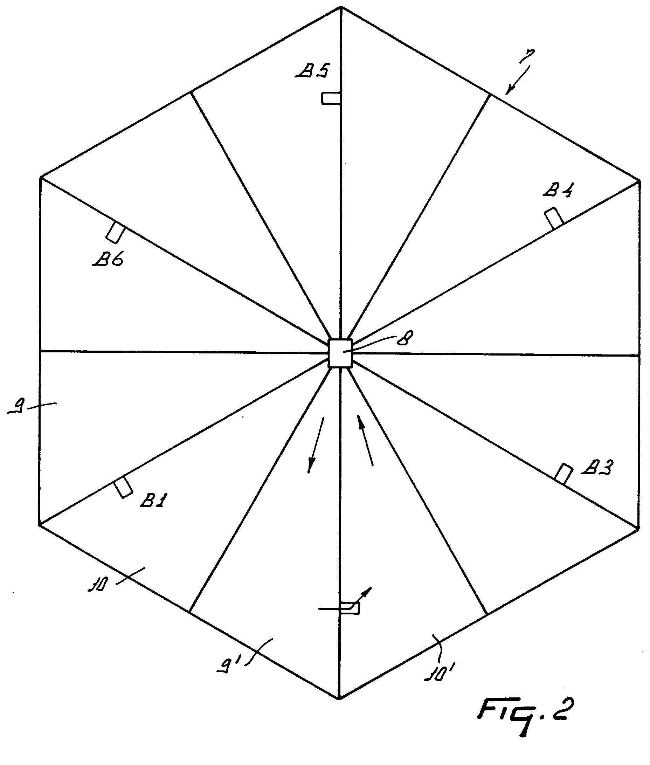

Figure 2 shows a different division of a pasture area 7, where the farm buildings 8 are situated in the centre and a rotation grazing system is adopted. For this purpose, the pasture area 7 around the farm buildings 8 is divided into separate pastures, viz. twelve in the present case. A one-way walk-through system for the animals is now constituted by two pastures 9 and 10, a one-way passageway B1 from the pasture 9 to pasture 10 and also the cowshed belonging to the farm buildings 8 with the milkbox provided therein. When the pastures 9 and 10 have insufficient grass for the animals, the animals are directed to a next pair of pastures 9' and 10', with a one-way walk-through system being constituted by the pasture 9', one one-way passageway B2 from pasture 9' to the pasture 10', the pasture 10' itself and again the cowshed with milkbox through which the pasture 9' is again reached. In the present embodiment, the animals arrive again at the first two pastures 9 and 10 after six periods of time, each comprising a certain number of days. In other words, the one-way walk-through system revolves about the farm buildings 8. Owing to the animals having the opportunity of regularly changing pasture fields, they can constantly take in fresh grass, which will add to the milk yield.

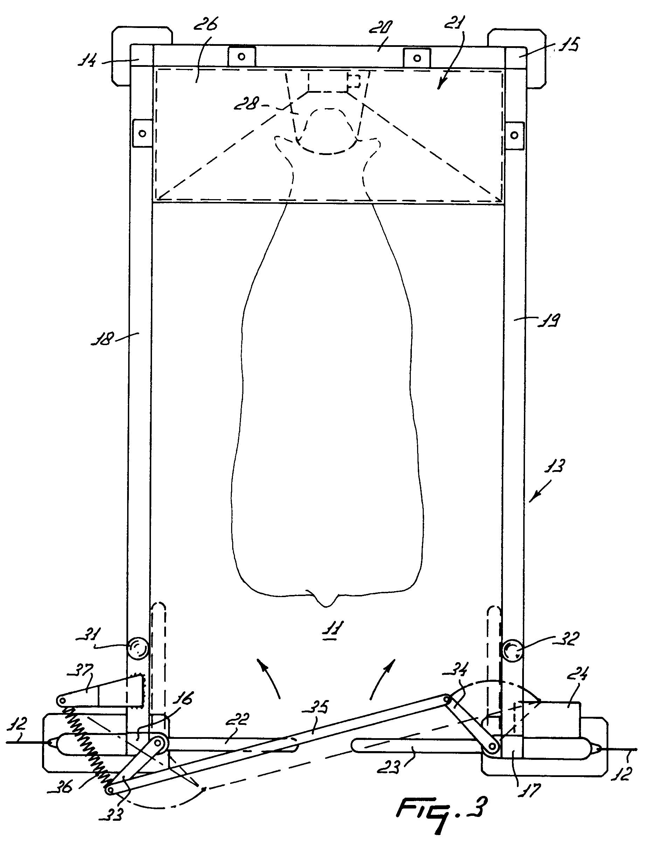

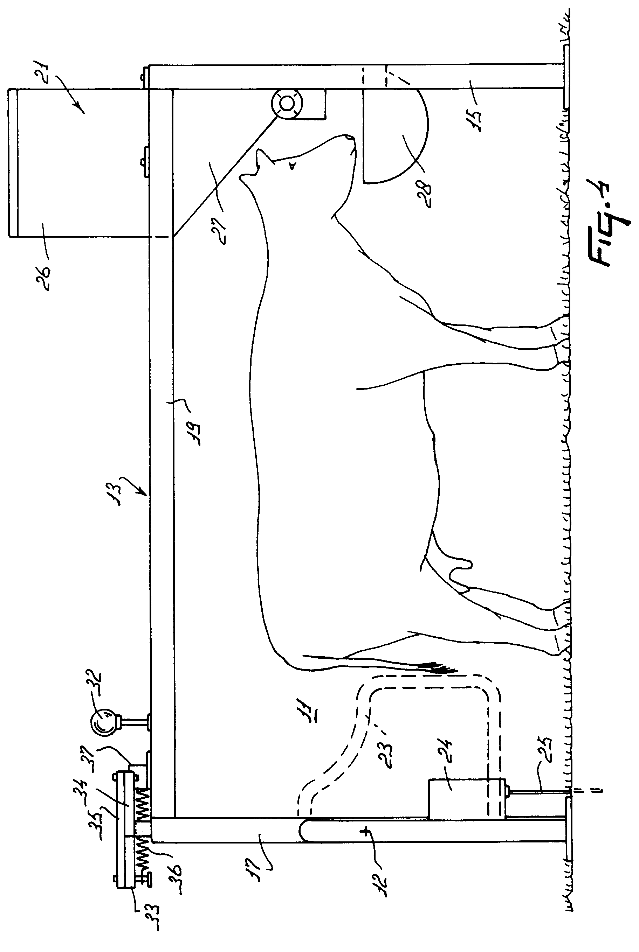

Figures 3, 4 and 5 show a passageway 11 in an electric wire fence 12, which passageway is designed such that feed, especially concentrate, can be administered locally to the animals. Of course, all kinds of other fences, railings, palings or similar enclosures instead of electric wire fences can be used for delimitation of individual pastures. The passageway 11 in the fence 12 is made up of a frame 13 whose front vertical frame beams 14 and 15, rear vertical frame beams 16 and 17 and horizontal frame beams 18, 19 and 20 constitute a box which is fully open on the side, is provided with an automatic feeding device 21 on the front side, and is provided with folding doors 22, 23 opening unidirectionally on the rear side. Beside one of the rear vertical frame beams, frame beam 17 in Figures 3 - 5, there is provided a current distribution cabinet 24 of which the incoming cable 25 runs underground from a farm building to the distribution cabinet 24, while the distribution cabinet 24 comprises the electrical units required for applying the appropriate current to the electric wire fence 12, for operating the automatic feeding device 21, for enabling the passageway 11 to be illuminated, etc. For the purpose of the illumination, lamps 31 and 32 capable of illuminating the passageway 11 are fitted on the two horizontal frame beams 18 and 19. As the installation should be permanently working, with the animals being milked preferably three times in twenty-four hours, the animals should be able to walk all over the pasture area in the dark, too. Accordingly, it is advantageous to have an indication provided by means of lamps 31, 32 as to where the passageway 11 in the two pastures situated furthest from the cowshed is located. The feeding device for the automatic administration of feed to the animals which have passed the folding doors 22, 23 opening unidirectionally, and therefore have passed the passageway 11, comprises a feed container 26 installed on top of the horizontal frame beams 18 and 19, while under the feed container 26 there is provided a hopper 27 for dropping in a controlled way the feed flowing from the feed container 26 into a feed trough 28, out of which the animals can eat.

The folding doors 22 and 23 opening unidirectionally are disposed at a certain distance from the ground surface and, furthermore, they slope down from the pivoting sides towards the centre. The doors 22 and 23 are hingedly connected to the rear vertical frame beams 16 and 17, respectively, by means of upwardly extending bearing members 29 and 30. A horizontal arm 33 extending rearwards and outwards is fixedly connected to the top side of the bearing member 29. A horizontal arm 34 extending forwards and inwards is fixedly connected to the top side of the bearing member 30. The ends of the arms 33 and 34 are hingedly interconnected by means of a tie-rod 35. The two arms 33 and 34 as well as the tie-rod 35 are mounted such that, in case one of the doors 22 and 23 is opened in the walk-through direction, the other door is simultaneously opened in the same direction, whereas the doors can only to a very small extent or not at all be opened against the walk-through direction.

As the doors slope down from the pivoting sides towards the centre, an animal which desires to go through the passageway 11 will tend to pass it as centrally as possible, with the doors being opened by the animal's body. For this purpose, the height of the doors at the centre is lower than that of the animal's head. However, if the animal should push mainly against one of the doors, yet both doors are opened by the construction comprising the arms 33 and 34 and the tierod 35, so that the animal can easily walk through the passageway 11. When the animal has passed the passageway, the door should be closed. To this end, the doors 22, 23 operationally open against the action of a spring 36. The doors are opened by the body of the animal and they remain pushing against the animal's body by the action of the spring 36 as long as the animal has not fully passed the doorway, while the doors close again by the action of the spring 36 when the animal has fully passed the doorway. The spring 36 provided in the present embodiment is therefore disposed between the end of one of the arms, viz. arm 33, and one supporting member 37 which is fixedly connected to the horizontal frame beam 18. Instead of a system where the doors are pushed open in one direction by the body of the animal and is closed by the action of a spring, it is feasible to utilize an electrically operated system designed such that the doors automatically open when an animal desiring to go through the passageway has come close to the doors, whereas they automatically close when the animal has fully passed the doorway. The distance between the automatic feeding device 21 and the doors 22 and 23 should be such that to the hind side of the animal there is a space sufficient to enable the doors 22 and 23 to be shut when the animal puts her head into the feed trough. The passageway 11 can also be provided with a counting device to count the number of animals that has gone through the passageway. In this way it is feasible to monitor the number of animals which have gone through the passageway. Such a counting device can also be fitted on the doors opening in one direction between the respective pasture fields into which the entire pasture area has been divided, as well as on the doors opening in one direction between the respective pastures and the cowshed. By this method it is made practicable to check the entire circulation process of the herd and, if necessary, to regulate it, for example, to prevent that all animals of the herd would have walked through the distinct pastures in too short a time and would be waiting at the milkbox.

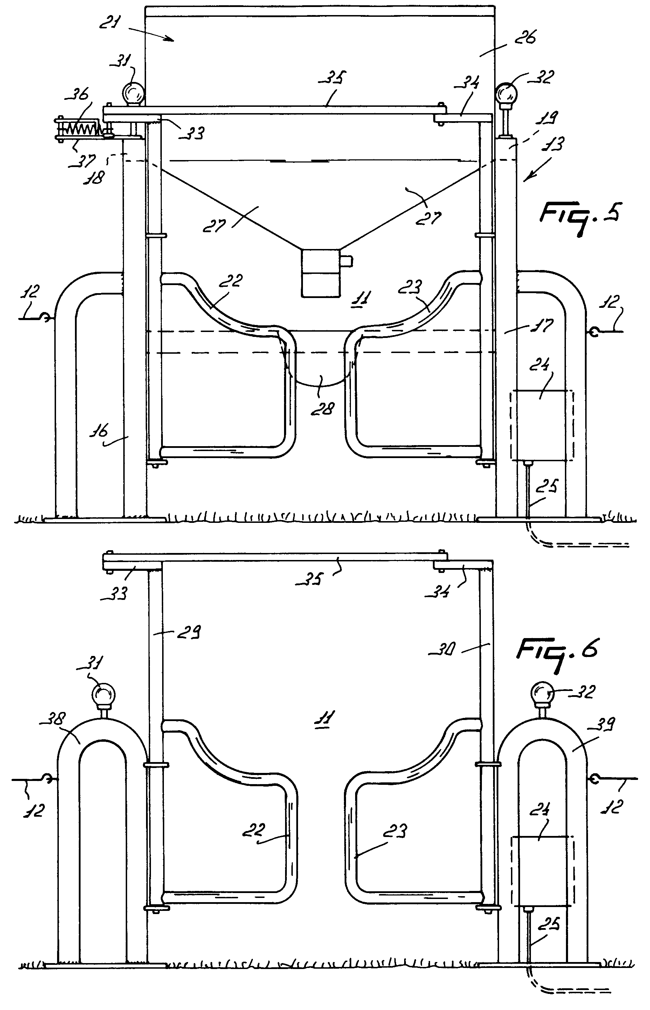

Figure 6 shows an embodiment of doors opening in one direction, in which no automatic feeding device is included. Therefore, this construction can be used for not only the passageways B in Figures 1 and 2, but also the passageways A of Figure 1. The frame of the passageway 11 is now merely made up of the beams 38 and 39, to which the doors 22 and 23 are hingedly connected by means of the bearing members 29 and 30. The doors 22 and 23 are again coupled to each other by arms 33 and 34 and a tie-rod 35 in the same way as in the embodiment of Figures 3 to 5.

Under certain circumstances it may be important that an animal can be kept in the direct surroundings of the milkbox. For example, there may be elapsed much time since the last milking; as the animal should go to the milkbox again within a relatively short time period, it cannot be allowed to go too far from the milkbox, e.g. to go into the pasture. Also for other reasons it may be desirable that an animal is retained in the direct surroundings of the milkbox, e.g. during the night when the next morning the animal must be treated someway by the veterinary surgeon, for insemination, etc. The limited space where the animal may be retained and wherein the milkbox is situated can be constituted by the cowshed 3 itself or by a part of the cowshed, optionally combined with a limited pasture area. In a computer can be stored the conditions under which an animal must be retained in this limited space. When e.g. this limited space is constituted by the cowshed 3, the door which allows an animal to enter a pasture is, based upon these conditions, controlled by the computer. Of course, the animals must be free to enter the limited space and to go to the milkbox.

The invention is not limited to the embodiments rendered and set forth hereinbefore, but it also relates to all kinds modifications, of course being within the scope of the accompanying claims.

## Claims

1. A construction for automatically milking animals, such as cows, comprising a milkbox (6) and an area where the animals are allowed to move freely, the construction further being provided with one or more doors, gates or similar devices (A, B) forming a one-way passageway, characterized in that the milkbox (6) is provided with a milking robot, the area is divided in at least two sub-areas (2, 4, 5; 9, 10) and the doors, gates or similar devices (A, B) are arranged between said at least two sub-areas to allow the animals to walk around through said at least two sub-areas to and from the milkbox (6) and at least one (B) of said doors, gates or similar devices (A, B) being provided with a feeding device for feeding animals.

2. A construction as claimed in claim 1, characterized in that, when a number of sub-areas (2; 9,10) is formed by pastures, fences with a one-way passageway (A, B) are provided between the pastures.

3. A construction as claimed in claim 1 or 2, characterized in that the construction comprises one or more by lamps (31, 32) illuminated passageways (A, B).

4. A construction according to any one of the preceding claims, characterized in that the farm buildings (8) are arranged about centrally in the construction, with the construction being provided with fences having one-way passageways (B).

5. A construction according to any one of the preceding claims, characterized in that the construction comprises at least one fence (12) provided with a passageway (11) equipped with two doors (22, 23) to be opened in one direction.

6. A construction as claimed in claim 5, characterized in that the doors (22, 23) open in one direction and slope down from the pivoting sides towards the centre.

7. A construction according to claim 5 or 6, characterized in that the doors (22, 23) are mounted at a certain distance from the ground.

8. A construction according to any one of the claims 5 - 7, characterized in that the doors (22, 23) are interconnected in such a way that in case one of the doors (22, 23) opens, the other one is opened simultaneously.

9. A construction according to any one of the claims 5 - 8, characterized in that the doors (22, 23) close by spring action.

10. A construction according to any one of the preceding claims, characterized in that the passageway (11) is provided in a fence, such as a wire fence, or similar construction.

11. A construction according to claim 10, characterized in that a passageway (B) is provided a current distribution box (24) of which the incoming cable (25) runs underground.

12. A construction according to claim 10 or 11, characterized in that the passageway (11) comprises a feeding device (21) for feeding the animals.

13. A construction according to any one of the claims 10 - 12, characterized in that the passageway (11) is capable of being closed at the farm buildings.

14. A construction according to any one of claims 10 - 13, characterized in that the passageway (11) opens automatically when an animal approaches this passageway.

15. A construction according to any one of claims 10 - 14, characterized in that the passageway is provided with a counting device to count the number of animals that has gone through the passageway.

16. A construction according to any one of the preceding claims, characterized in that the milkbox is transportable.

17. A construction according to claim 16, characterized in that animals are allowed to visit two pastures (9, 10) when they follow the one-way system.

18. A construction according to claim 16 or 17, characterized in that the animals are supplied with concentrated food.

19. A construction according to claim 18, characterized in that the animals are automatically supplied with concentrated food during milking.

## Patentansprüche

1. Vorrichtung zum automatischen Melken von Tieren, wie z. B. Kühen, mit einer Melkbox (6) und einem Bereich, in dem sich die Tiere frei bewegen können, wobei die Vorrichtung ferner eine oder mehrere Türen, Tore oder ähnliche Einrichtungen (A, B) aufweist, die in nur einer Richtung einen Durchgang bilden,
dadurch gekennzeichnet, daß die Melkbox (6) mit einem Melkroboter versehen ist, daß der Bereich in mindestens Zwei Unterbereiche (2, 4, 5; 9, 10) unterteilt ist, und daß die Türen, Tore oder ähnlichen Einrichtungen (A, B) zwischen mindestens zwei Unterbereichen angeordnet sind, um den Tieren zu ermöglichen, durch mindestens zwei Unterbereiche zur Melkbox (6) hin und von ihr weg zu gehen, wobei mindestens eine (B) der Türen, Tore oder ähnlichen Einrichtungen (A, B) eine Fütterungsvorrichtung zum Füttern der Tiere aufweist.

2. Vorrichtung nach Anspruch 1,
dadurch gekennzeichnet, daß mehrere Unterbereiche (2; 9, 10) durch Weiden gebildet sind und zwischen den Weiden Zäune mit einem Einwegdurchgang (A, B) vorgesehen sind.

3. Vorrichtung nach Anspruch 1 oder 2,
gekennzeichnet durch einen oder mehrere durch Lampen (31, 32) beleuchtete Durchgänge (A, B).

4. Vorrichtung nach einem der vorhergehenden Ansprüche, dadurch gekennzeichnet, daß die Wirtschaftsgebäude (8) etwa mittig in der Vorrichtung angeordnet sind, die Zäune mit Einwegdurchgängen (B) aufweist.

5. Vorrichtung nach einem der vorhergehenden Ansprüche, gekennzeichnet durch mindestens einen Zaun (12), der einen Durchgang (11) mit zwei in einer Richtung zu öffnenden Türen (22, 23) aufweist.

6. Vorrichtung nach Anspruch 5,
dadurch gekennzeichnet, daß die Türen (22, 23) in eine Richtung öffnen und von den Schwenkseiten zur Mitte abfallen.

7. Vorrichtung nach Anspruch 5 oder 6,
dadurch gekennzeichnet, daß die Türen (22, 23) in einem vorgegebenen Abstand zum Boden angeordnet sind.

8. Vorrichtung nach einem der Ansprüche 5 bis 7,
dadurch gekennzeichnet, daß die Türen (22, 23) derart miteinander verbunden sind, daß beim Öffnen einer der Türen (22, 23) die andere gleichzeitig geöffnet wird.

9. Vorrichtung nach einem der Ansprüche 5 bis 8,
dadurch gekennzeichnet, daß die Türen (22, 23) durch Federkraft schließen.

10. Vorrichtung nach einem der vorhergehenden Ansprüche,
dadurch gekennzeichnet, daß der Durchgang (11) in einem Zaun wie z. B. einem Drahtzaun oder einer ähnlichen Konstruktion ausgebildet ist.

11. Vorrichtung nach Anspruch 10,
dadurch gekennzeichnet, daß ein Durchgang (B) einen Stromverteilerkasten (24) aufweist, dessen Eingangsleitung (25) unterirdisch verlegt ist.

12. Vorrichtung nach Anspruch 10 oder 11,
dadurch gekennzeichnet, daß der Durchgang (11) mit einer Fütterungsvorrichtung (21) zum Füttern der Tiere versehen ist.

13. Vorrichtung nach einem der Ansprüche 10 bis 12,
dadurch gekennzeichnet, daß der Durchgang (11) in den Wirtschaftsgebäuden zu verschließen ist.

14. Vorrichtung nach einem der Ansprüche 10 bis 13,
dadurch gekennzeichnet, daß der Durchgang (11) automatisch öffnet, wenn sich ein Tier dem Durchgang nähert.

15. Vorrichtung nach einem der Ansprüche 10 bis 14,
dadurch gekennzeichnet, daß der Durchgang eine Zählvorrichtung zum Zählen der Tiere aufweist, die den Durchgang benutzt haben.

16. Vorrichtung nach einem der vorhergehenden Ansprüche,
dadurch gekennzeichnet, daß die Melkbox transportabel ist.

17. Vorrichtung nach Anspruch 16,
dadurch gekennzeichnet, daß die Tiere zwei Weiden (9, 10) aufsuchen können, wenn sie dem Einwegsystem folgen.

18. Vorrichtung nach Anspruch 16 oder 17,
dadurch gekennzeichnet, daß die Tiere mit Kraftfutter versorgt werden.

19. Vorrichtung nach Anspruch 18,
dadurch gekennzeichnet, daß die Tiere während des Melkens automatisch mit Kraftfutter versorgt werden.

## Revendications

1. Structure pour la traite automatique d'animaux, tels que des vaches, comprenant une chambre de traite (6) et une zone dans laquelle les animaux peuvent se déplacer librement, la structure étant pourvue en outre d'une ou plusieurs portes, entrées ou dispositifs (A, B) analogues formant un passage à une voie, caractérisée en ce que la chambre de traite (6) est pourvue d'un robot de traite, la zone étant divisée en au moins deux sous-zones (2, 4, 5; 9, 10) et les portes, entrées ou dispositifs (A, B) analogues étant disposées entre lesdites au moins deux sous-zones afin de permettre aux animaux de marcher en passant par lesdites au moins deux sous-zones, vers et depuis la chambre de traite (6), et au moins l'une (B) desdites portes entrées ou dispositifs (A, B) analogues étant pourvus d'un dispositif de distribution de nourriture pour alimenter les animaux.

2. Structure selon la revendication 1 caractérisée en ce que, lorsqu'un certain nombre de sous-zones (2, 9, 10) est formé par des pâturages, des clôtures avec un passage à une voie (A, B) sont prévues entre les pâturages.

3. Structure selon la revendication 1 ou 2, caractérisée en ce que la structure comprend un ou plusieurs passages (A, B) éclairés par des lampes (31, 32).

4. Structure selon l'une quelconque des revendications précédentes, caractérisée en ce que les bâtiments de ferme (8) sont disposés centralement dans la structure, la structure étant pourvue de clôtures ayant des passages à une voie (B).

5. Structure selon l'une quelconque des revendications précédentes, caractérisée en ce que la structure comprend au moins une clôture (12) pourvue d'un passage (11) équipé de deux portes (22, 23) devant être ouvertes dans un sens.

6. Structure sel on la revendication 5 caractérisée en ce que les portes (22, 23) s'ouvrent dans un sens et s'inclinent vers le bas depuis les côtés pivotants vers le centre.

7. Structure selon la revendication 5 ou 6, caractérisée en ce que les portes (22, 23) sont montées à une certaine distance du sol.

8. Structure selon l'une quelconque des revendications 5 à 7, caractérisée en ce que les portes (22, 23) sont reliées entre elles de manière que, dans le cas où l'une des portes (22, 23) s'ouvre, l'autre porte soit ouverte simultanément.

9. Structure selon l'une quelconque des revendications 5 à 8, caractérisée en ce que les portes (22, 23) se ferment par une action élastique.

10. Structure selon l'une quelconque des revendications précédentes, caractérisée en ce que le passage (11) est prévu dans une clôture, telle qu'une clôture en fils métalliques, ou d'une autre structure.

11. Structure selon la revendication 10, caractérisée en ce que dans un passage (B) est prévue une boite de distribution de courant (24) dont le câble entrant (25) s'étend au-dessous du sol.

12. Structure selon la revendication 10 ou 11, caractérisée en ce que le passage (11) comprend un dispositif d'alimentation (21) pour alimenter les animaux.

13. Structure selon l'une quelconque des revendications 10 à 12, caractérisée en ce que le passage (11) peut être fermé au niveau des bâtiments de ferme.

14. Structure selon l'une quelconque des revendications 10 à 13, caractérisée en ce que le passage (11) s'ouvre automatiquement lorsqu'un animal s'approche de ce passage.

15. Structure selon l'une quelconque des revendications 10 à 14, caractérisée en ce que le passage est pourvu d'un dispositif de comptage servant à compter le nombre d'animaux qui est passé par le passage.

16. Structure selon l'une quelconque des revendications précédentes caractérisée en ce que la chambre de traite est transportable.

17. Structure selon la revendication 16, caractérisée en ce que les animaux peuvent visiter deux pâturages (9, 10) lorsqu'ils suivent le système à une voie.

18. Structure selon la revendication 16 ou 17, caractérisée en ce que les animaux sont nourris avec de la nourriture concentrée.

19. Structure selon la revendication 18, caractérisée en ce que les animaux sont automatiquement nourris avec de la nourriture concentrée, durant la traite.
